# EUROPÄISCHE PATENTSCHRIFT

(11) **EP 1 282 297 B1**
(45) Veröffentlichungstag und Bekanntmachung des Hinweises auf die Patenterteilung: **17.10.2007**
(21) Anmeldenummer: 02017451.2
(22) Anmeldetag: 04.08.2002
(51) Int. Cl.: H04M 9/08

(54) **Verfahren und Anordnung zur Echo- und Störgeräuschunterdrückung**
Method and apparatus for echo and noise suppression
Procede et dispositif pour la suppression du bruit et d'echo

(30) Priorität: 03.08.2001 DE 10138179
(43) Veröffentlichungstag der Anmeldung: 05.02.2003
(73) Patentinhaber: Harman Becker Automotive Systems GmbH, 76307 Karlsbad (DE)
(72) Erfinder: Gierl, Stefan, 76133 Karlsruhe (DE); Benz, Christoph, 77797 Ohlsbach (DE)
(74) Vertreter: Patentanwälte Westphal, Mussgnug & Partner

(56) Entgegenhaltungen:
- EP-A2- 0 789 476
- DE-A1- 19 729 521
- DE-C1- 19 650 410

## Beschreibung

Die Erfindung betrifft ein Verfahren zur Echo- und Störgeräuschunterdrückung in Telekommunikationsgeräten, insbesondere für ein mit einer Freisprecheinrichtung ausgestattetes Telefon entsprechend dem Oberbegriff des Anspruches 1 sowie eine Anordnung zur Durchführung dieses Verfahrens entsprechend dem Oberbegriff des Anspruches 8.

Bei einem mit einer Freisprecheinrichtung ausgestatteten Telefon ergibt sich allgemein das Problem, daß die Sprache des Teilnehmers wegen des Abstandes zum Mikrofon gedämpft und von Umgebungsgeräuschen überlagert übertragen wird. Wegen des häufig hohen Pegels der Umgebungsgeräusche ist der Signal/Störabstand gering. Außerdem wird das über den ankommenden Signalkanal eintreffende und vom Lautsprecher wiedergegebene Signal vom Mikrofon aufgenommen und zurückübertragen. Diese Störkomponenten müssen vor der Übertragung zum fernen Gegenteilnehmer entfernt werden, da dieser sonst sein eigenes Echo wahrnehmen und die Sprachverständlichkeit durch die Störgeräusche beeinträchtigt würde.

Zur Reduktion der Störgeräusche und damit zur Verbesserung der Sprachübertragung werden Geräuschreduktionssysteme eingesetzt. Diese arbeiten vorzugsweise im Frequenzbereich und führen auf der Basis des geschätzten Leistungsdichtespektrums des Störgeräusches eine Filterung durch. Die Schätzung des Leistungsdichtespektrums erfolgt entweder in den Sprachpausen oder fortlaufend.

Ein entsprechend arbeitendes Verfahren ist beispielsweise durch DE-OS 197 29 521 bekannt. Zur Echounterdrückung wird ein beliebiger Echokompensator verwendet, dessen Ausgangssignal einem Filter zugeführt wird, das dann auf der Basis eines geschätzten Leistungsdichtespektrums sowohl des Restechosignals als auch des Störsignals eine Filterung zur kombinierten Dämpfung des Restechos und Störsignals durchführt.

Gegenstand der Erfindung ist ein demgegenüber verbessertes Verfahren. Ausgangspunkt hierfür ist eine Lösung gemäß Patentanspruch 1. Danach wird das sich auf das Echosignal beziehende Leistungsdichtespektrum nicht geschätzt, sondern unmittelbar vom fouriertransformierten Signal des ankommenden Signalkanals abgeleitet. Die Echokompensation ist dadurch viel effektiver.

Eine weitere Verbesserung der Störgeräuschreduktion ergibt sich durch eine Weiterbildung der Erfindung entsprechend Patentanspruch 2, indem auch der ankommende Signalkanal über ein Spektralsubtraktionsfilter geleitet wird, das das vom abgehenden gefilterten Mikrofonsignal abgeleitete Leistungsdichtespektrum berücksichtigt. Dadurch wird verhindert, daß das möglicher Weise über den ankommenden Signalkanal zurückkehrende eigene Sprachsignal vom eigenen Lautsprecher wiedergegeben wird, weil es zum Übersprechen in der Gabelschaltung kommt oder die Echokompensation auf der Gegenseite nicht einwandfrei arbeitet. Durch die Verwendung dieses zweiten Spektralsubtraktionsfilter steht außerdem das für das Spektralsubtraktionsfilter im abgehenden Signalkanal benötigte Leistungsdichtespektrum für die Echokompensation ohne weiteren Aufwand zur Verfügung.

Eine weitere Verbesserung der Sprachverständlichkeit läßt sich bei Freisprecheinrichtungen in lauten Umgebungen, wie z.B. in einem Kraftwagen, gemäß Patentanspruch 3 erreichen, indem analog einer aus dem Patent DE 44 45 983 C2 bekannten Lösung zur Rauschunterdrückung beim vom ungefilterten Mikrofonsignal abgeleiteten Leistungsdichtespektrum das Minimum der Leistungsdichte bestimmt und als Maß für die Störleistungsdichte zur Bildung eines ungestörten abgehenden Mikrofonsignals verwendet wird. Durch zusätzliche Unterteilung des Leistungsdichtespektrums in Teilbänder gemäß Patentanspruch 4 und Bestimmung des Minimums in jedem der Teilbänder in Verbindung mit Plausibilitätskontrollen und Wertebereichsbeschränkungen lassen sich relativ breitbandige und rauschartige Störgeräusche unterdrükken, deren Frequenzgänge durchaus eine spektrale Formung aufweisen. Dabei ist durch die Unterteilung des Spektrums in Frequenzbänder eine Annäherung an den Verlauf der Störleistungsdichte möglich.

Eine zusätzliche Weiterbildung der Erfindung ergibt sich aus Patentanspruch 5, die eine Beseitigung von Restgeräuschen im bereits gefilterten Mikrofonsignal bei komplexeren Störgeräuschen durch ein weiteres Spektralsubtraktionsfilter im abgehenden Signalkanal zum Gegenstand hat.

Weitere Eizelheiten des Verfahrens beziehen sich auf die Verwendung von Freisprecheinrichtungen mit mehr als einem Mikrofon.

Anordnungen zur Durchführung der Verfahren gemäß der Erfindung ergeben sich aus den Patentansprüchen 8 bis 13.

Nachfolgend seien Einzelheiten der Erfindung an Hand der in der Zeichung dargestellten Ausführungsbeispiele näher erläutert. Im Einzelnen zeigen
- FIG 1: ein Blockschaltbild eines Telekommunikationsgerätes gemäß der Erfindung und
- FIG 2: ein Blockschaltbild für Anordnungen mit mehr als einem Mikrofon als Teil von FIG 1.

Die Blockschaltbilder dienen lediglich zur Erläuterung des strukturellen Aufbaus hinsichtlich der für die Erfindung benötigten Funktionseinheiten. Zur Realisierung können dagegen in bekannter Weise digitale Signalprozessoren verwendet werden.

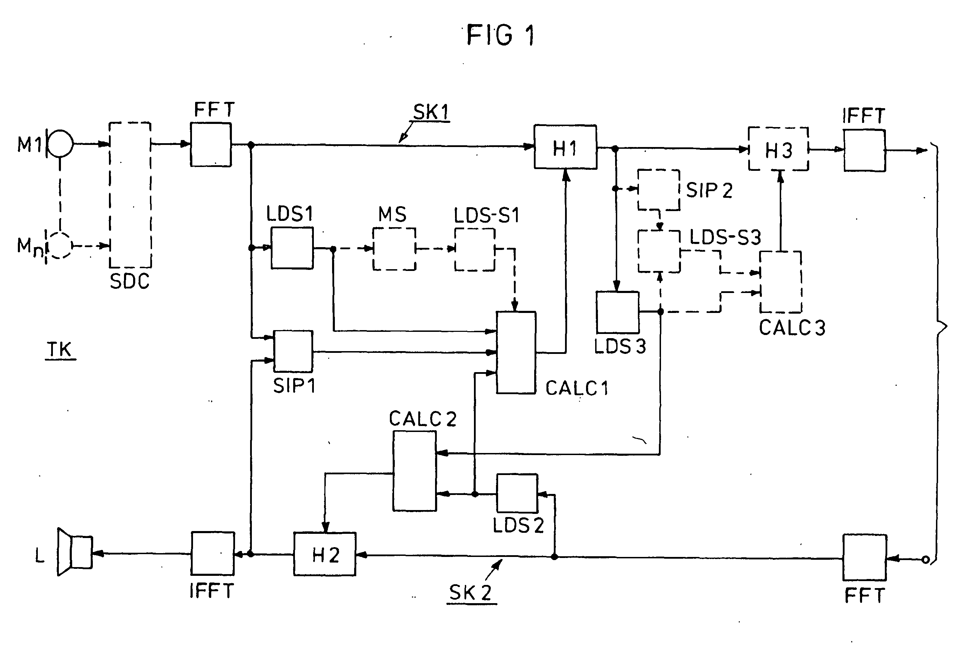

Beim Blockschschaltbild von FIG 1 bezieht sich der ausgezogene Teil der Figur auf den Grundausbau eines Telekommunikationsgerätes TK gemäß der Erfindung, der durch die gestrichelt gezeigten Einrichtungen ergänzt werden kann. Gezeigt ist im linken Teil ein Mikrofon M1 am abgehenden Signalkanal SK1 und ein Lautsprecher L am ankommenden Signalkanal SK2. In beiden Signalkanälen sind, da die Spektralsubtraktionsfilter im Frequenzbereich arbeiten, Einrichtungen FFT zur schnellen Fouriertransformation und Einrichtungen IFFT zur Rücktransformation in den Zeitbereich vorgesehen.

Die übrigen Funktionseinheiten der vorgesehenen Spektralsubtraktionsfilter werden von den im Signalkanal SK... angeordneten eigentlichen Filtereinheiten H... in Verbindung mit den Einheiten LDS... zur Ableitung des jeweils benötigten Leistungsdichtespektrums und den Einheiten CALC... zur Berechung der Filterkoeffizienten für die jeweilige Übertragungsfunktion gebildet.

Das aus den Einheiten LDS1, CALC1 und H1 bestehende Spektralsubtraktionsfilter im abgehenden Signalkanal SK1 dient der kombinierten Filterung der Störgeräusch- und Echosignale im Mikrofonsignal, wobei das Leistungsdichtespektrum des Störgeräuschsignals in bekannter Weise geschätzt wird, während das Leistungsdichtespektrum des Echossignals durch die Einheit LDS2 vom fouriertransformierten Signal des ankommenden Signalkanals SK2 abgeleitet und der Einheit CALC1 zugeführt wird. Die abgeleiteten Leistungsdichtespektren werden jedoch nur dann für die Einheit CALC1 freigegeben, wenn allein abgehend gesprochen wird, was in bekannter Weise, z.B. durch Überwachung der Signalpegel an beiden Signalkanälen, durch die Einrichtung S/P1 überwacht und gesteuert wird.

Das aus den Funktionseinheiten LDS1, CALC2 und H2 bestehende Spektralsubtraktionsfilter verhindert, daß das vom Mikrofon M1 aufgenommene Sprachsignal über den ankommenden Signalkanal SK2 zum Lautsprecher L gelangt und von diesem wiedergegeben wird. Dieses könnte beispielsweise möglich sein, wenn in der Gabelschaltung ein Übersprechen erfolgt oder die Echokompensation auf der Gegenseite unzureichend ist. Die Filterung erfolgt in diesem Falle in Verbindung mit dem vom gefilterten Mikrofonsignal durch die Einheit LDS3 abgeleitete Leistungsdichtespektrum, das der Einheit CALC2 zugführt wird.

Insgesamt ist so ein Vollduplexbetrieb mit hoher Sprachqualität und -verständlichkeit beim Freisprechen möglich.

Ausgehend von der bisher beschriebenen Anordnung lassen sich mit den gestrichelt gezeichneten Ergänzungen weitere Verbesserungen bezüglich der Geräuschreduktion beim Einsatz in lärmerfüllter Umgebung erzielen. Hierzu wird ein durch das Patent DE 44 45 983 C2 bereits bekanntes Verfahren in analoger Weise verwendet.

Zu diesem Zweck ist die Einheit LDS1 zusätzlich mit einer Einheit MS gekoppelt, die das von der Einheit LDS1 ermittelte Leistungsdichtespektrum in Teilbänder unterteilt, wobei in jedem dieser Teilbänder das Minimum der Leistungsdichte bestimmt wird. Mit der nachfolgenden Einheit LDS-S1 wird dann aus den ermitttelten Werten in Verbindung mit einer Plausibilitätskontrolle und gegebenenfalls durch Wertebereichsbeschränkungen ein Schätzwert für die Störleistungsdichte gewonnen und an die Einrichtung CALC1 weitergeleitet. Die ermittelte Störleistungsdichte beschreibt im wesentlichen breitbandige bzw. rauschartige Störanteile, die sich dem eigentlichen Nutzsignal überlagern und ohne Beeinträchtigung der Sprachqualität von der Leistungsdichte des Mikrofonsignals abgezogen werden können.

Außerdem kann zur Unterdrückung komplexerer Störgeräusche noch ein weiteres Spektralsubtraktionsfilter im abgehenden Signalkanal SK1 vorgesehen sein, dessen Filtereinheit H3 mit dem Ausgang der Filtereinheit H1 gekoppelt ist und Restgeräusche beseitigt. Dazu wird eine Auswertung der Störleistungsdichte nach erfolgter Echokompensation am Ausgang der Filtereinheit H1 vorgenommen, indem die Einheit LDS-S1 aus dem von der Einheit LDS3 in den Sprachpausen ermittelten Leistungsdichtespektrum des echokompensierten Signals einen Schätzwert für die Störleistungsdichte bildet und an die Einrichtung CALC3 liefert, die die Übertragungsfunktion der Filtereinheit H3 festlegt. Die Sprachpausen werden dabei durch die Einheit S/P2 in bekannter Weise ermittelt. Mit der Einheit (LDS-S3) kann in Sprachpausen die Störleistungsdichte aber auch direkt aus LDS3 bestimmt werden. Damit ist in vielen Fällen eine stärkere Störunterdrückung möglich im Vergleich zu dem Fall, bei dem in (LDS-S3) nur das Minimum der Leistungsdichte als Maß für die Störleistungsdichte bestimmt wird.

Eine weitere Verbesserung der Anordnung läßt sich durch die Anordnung von mehr als einem Mikrofon erreichen, was ebenfalls in FIG 1 durch das weitere Mikrofon Mn und die Steuereinheit SDC gestrichelt angedeutet ist.

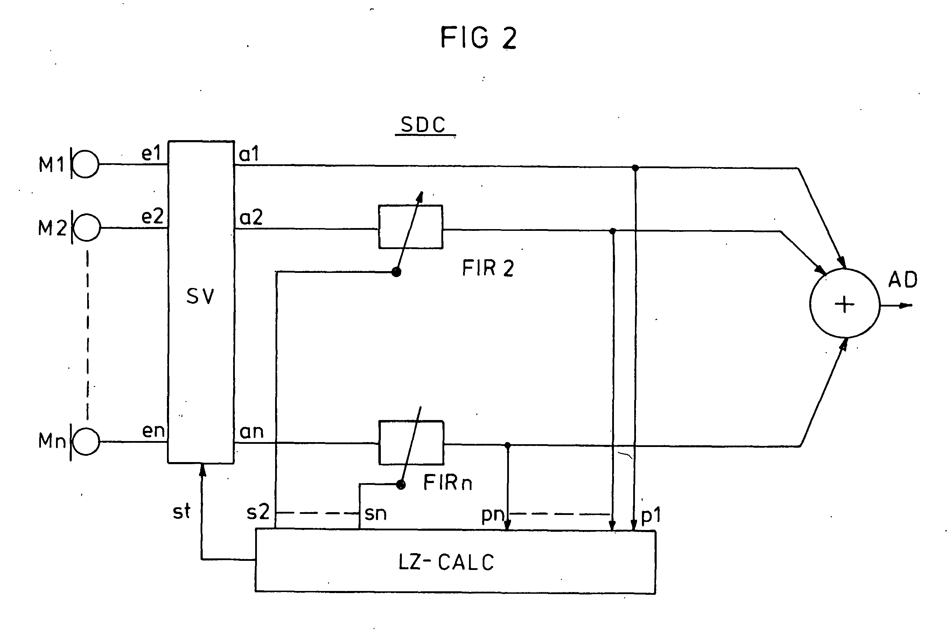

FIG 2 zeigt ein Blockschaltbild dieser Steuereinheit, die als eigenständiger digitaler Signalprozessor realisiert sein kann. Alle Mikrofone M1, M2 bis Mn sind an die Eingänge e1 bis en eines steuerbaren Signalverteilers SV angeschlossen, der die Durchschaltung zu den Ausgängen a1 bis an steuert. Alle diese Ausgänge sind mit Ausnahme des Ausganges a1 über als Laufzeitglieder arbeitende einstellbare digitale Filter FIR2 bis FIRn mit den Eingängen einer Addierschaltung AD verbunden. Gesteuert wird alles durch eine Laufzeitsteuereinheit LZ-CALC, deren Prüfeingänge p1 bis pn der Reihe nach mit den zu den Eingängen der Addierschaltung führenden Leitungen verbunden sind. Außerdem sind Steuersignalleitungen s2 bis sn mit den einzelnen Filtern FIR2 bis FIRn zur Übermittlung der Einsstellinformationen verbunden. Weiterhin wird über Steuersignalleitungen st die Einstellung des Signalverteilers SV gesteuert.

Die Arbeitsweise der Anordnung beruht auf folgender Überlegung. Je nach Sprecherposition weisen die Signale der einzelnen Mikrofone M1 bis Mn unterschiedliche Laufzeiten für die aufgenommenen Sprachsignale auf. Bei Ausgleich der Laufzeitdifferenzen durch entsprechend eingestellte Verzögerungsglieder können die einzelnen Nutzsignale phasensynchron addiert werden. Die Störanteile, die zwischen den einzelnen Mikrofonen unkorreliert sind, addieren sich dagegen rein stochastisch, so daß der Signal/Rauschabstand verbessert wird.

Als Bezugspunkt für die Bestimmung der einzelnen Verzögerungen dient zweckmäßig das Mikrofon, das am weitesten vom Sprecher entfernt ist und dessen Signal nicht weiter verzögert werden sollte. Es wird zum Ausgang a1 des Signalverteilers SV durchgeschaltet.

Die Überprüfung erfolgt durch die Laufzeitsteuereinheit LZ-CALC an Hand der über die Prüfeingänge p1 bis pn zugeführten Signale. Davon abhängig erfolgt die Einstellung des Signalverteilers SV. Anschließend werden die einzelnen Verzögerungsglieder FIR... der Reihe nach eingestellt und dadurch die Laufzeitdifferenz zwischen dem jeweils ausgewählten Signal und dem Signal am Ausgang a1 des Signalverteilers SV beseitigt.

Eine mögliche Lösung zur Bestimmung des als Bezugspunkt zu wählenden Mikrofons M...besteht darin, daß man nacheinander eines der Signale an den Ausgängen a2 bis an auswählt und die Differenz mit dem Signal am Ausgang a1 bildet. Anschließend wird das ausgewählte Signal stufenweise durch das zugehörige Filter FIR... verzögert. Vermindert sich dabei das Differenzsignal, so ist dies ein Indiz dafür, daß das ausgewählte Signal nicht auf den Ausgang a1 des Signalverteilers zu schalten ist. Andernfalls ist umzusteuern und die Suchprozedur mit dem neuen Bezugssignal fortzusetzen usw.. Typische Adaptionsverfahren, die zur Berechnung der Filterkoeffizienten herangezogen werden können, sind beispielsweise Verfahren zur Minimierung des mittleren quadratischen Fehlers entsprechend dem LMS-Algorithmus oder Derivate hiervon.

Die Bestimmung des als Bezugspunkt zu wählenden Mikrofons M...wird zwangsläufig mit zunehmender Anzahl der Mikrofone schwieriger und zeitaufwendiger und sollte daher auf eine geringe Anzahl beschränkt bleiben.

## Patentansprüche

1. Verfahren zur Echo- und Störgeräuschunterdrückung in Telekommunikationsgeräten (TK), insbesondere für ein mit einer Freisprecheinrichtung ausgestattetes Telefon, bei dem der abgehende Signalkanal (SK1) über ein Spektralsubtraktionsfilter (H1) geleitet wird, das sowohl auf das Leistungsdichtespektrum des Störsignals als auch des Echosignals Bezug nehmende Teile zur Dämpfung berücksichtigt,
**dadurch gekennzeichnet,**
**daß** mit Bezug auf das Echosignal das vom fouriertransformierten Signal des ankommenden Signalkanals (SK2) abgeleitete Leistungsdichtespektrum (LDS2) berücksichtigt wird.

2. Verfahren nach Anspruch 1,
**dadurch gekennzeichnet,**
**daß** der ankommende Signalkanal (SK2) ebenfalls über ein Spektralsubtraktionsfilter (H2) geleitet wird, das das Leistungsdichtespektrum (LDS3) des abgehend gefilterten Mikrofonsignals berücksichtigt.

3. Verfahren nach Anspruch 1 oder 2,
**dadurch gekennzeichnet,**
**daß** beim vom ungefilterten Mikrofonsignal abgeleiteten Leistungsdichtespektrum (LDS1) das Minimum der Leistungsdichte bestimmt und als Maß für die Störleistungsdichte (LDS-S1) zur Bildung eines ungestörten abgehenden Mikrofonsignals verwendet wird.

4. Verfahren nach Anspruch 3,
**dadurch gekennzeichnet,**
**daß** das Leistungsdichtespektrum (LDS1) in Teilbänder unterteilt wird und in jedem dieser Teilbänder das Minimum der Leistungsdichte bestimmt wird, wobei der Wert für die Störleistungsdichte durch Plausibilitätskontrollen und vorgegebene Wertebereichsbeschränkungen ermittelt wird.

5. Verfahren nach Anspruch 4,
**dadurch gekennzeichnet,**
**daß** das vom Spektralsubtraktionsfilter (H1) im abgehenden Signalkanal (SK1) gelieferte gefilterte Mikrofonsignal über ein weiteres Spektralsubtraktionsfilter (H3) geleitet wird, wobei aus dem Leistungsdichtespektrum (LDS3) des bereits gefilterten Mikrofonsignals in den Sprachpausen ebenfalls ein Wert für die Störleistungsdichte (LDS-S3) ermittelt und zur Beseitigung von Restgeräuschen durch das weitere Spektralsubtraktionsfilter (H3) im abgehenden Signalkanal (SK1) verwendet wird.

6. Verfahren nach einem der Ansprüche 1 bis 4,
**dadurch gekennzeichnet,**
**daß** bei Freisprecheinrichtungen mit mehr als einem Mikrofon (M1...Mn) die Laufzeitdifferenzen der Mikrofonsignale durch adaptiv einstellbare Signalverzögerungen ausgeglichen werden und die Mikronfonsignale phasensynchron addiert werden, bevor das Summensignal der weiteren Verarbeitung zur Echo- und Störgeräuschunterdrückung zugeleitet wird.

7. Verfahren nach Anspruch 6,
**dadurch gekennzeichnet,**
**daß** als Bezugspunkt für die Kompensation der Laufzeitunterschiede jeweils das die größte Laufzeitverschiebung verursachende Mikrofon gewählt wird.

8. Anordnung zur Echo- und Störgeräuschunterdrückung in Telekommunikationsgeräten (TK), insbesondere für ein mit einer Freisprecheinrichtung ausgestattetes Telefon, bei dem der abgehende Signalkanal (SK1) über ein Spektralsubtraktionsfilter (H1) geleitet wird, das eine kombinierte Echodämpfung und Störgeräuschreduktion ausführt,
**dadurch gekennzeichnet,**
**daß** zusätzlich Einrichtungen (FFT,LDS2) zur Fouriertransformation und zur Ermittlung des Leistungdichtesprektrums mit dem ankommenden Signalkanal (SK2) gekoppelt sind und daß die Einrichtung (LDS2) zur Ermittlung des Leistungdichtesprektrums mit der Einrichtung (CALC1) zur Berechnung der Übertragungsfunktion für das Spektralsubtraktionsfilter (H1) verbunden ist, um das Echosignal zu kompensieren.

9. Anordnung nach Anspruch 8,
**dadurch gekennzeichnet,**
**daß** auch im ankommenden Signalkanal (SK2) ein Spektralsubtraktionsfilter (H2) angeordnet ist, dessen Teilkomponenten (FFT,LDS2) zugleich das Leistungsdichtespektrum für die Einrichtung zur Berechnung der Übertragungsfunktion für das Spektralsubtraktionsfilter (H1) im abgehenden Signalkanal (SK1) bereitstellen, und daß mit dem Ausgang des Spektralsubtraktionsfilter (H1) im abgehenden Signalkanal (SK1) eine weitere Einrichtung (LDS3) zur Ermittlung des Leistungsdichtespektrums des gefilterten Mikrofonsignales gekoppelt ist, die mit der Einrichtung (CALC2) zur Berechnung der Übertragungsfunktion für das andere Spektralsubtraktionsfilter (H2) im ankommenden Signalkanal (SK2) verbunden ist, um gegenläufige eigene Sprachanteile im ankommenden Signalkanal für den Lautsprecher (L) zu reduzieren.

10. Anordnung nach einem der Ansprüche 8 oder 9,
**dadurch gekennzeichnet,**
**daß** mit der Einrichtung (LDS1) zur Ermittlung des Leistungsdichtespektrums des ungefilterten Mikrofonsignals für das Spektralsubtraktionsfilter (H1) des abgehenden Signalkanals (SK1) desweiteren eine Einrichtung (MS) zur Bestimmung des Minimums der Leistungsdichte des gestörten Mikrofonsignales als Maß für die Störleistungsdichte (LDS-S1) gekoppelt ist, um die Übertragungsfunkion des Spektralsubtraktionsfilter (H1) des abgehenden Signalkanals (SK1) entsprechend zu beeinflussen.

11. Anordnung nach Anspruch 10,
**dadurch gekennzeichnet,**
**daß** die Einrichtung (MS) zur Bestimmung des Minimums der Leistungsdichte auch für die Bestimmung des Maximums vorgesehen ist und daß eine Einheit zur Wertebereichskontrolle vorgesehen ist, die an Hand der ermittelten Extremwerte eine Plausibilitätsprüfung durchführt, um die Korrektur des zu filternden Mikrofonsignals zu beeinflussen.

12. Anordnung nach Anspruch 11,
**dadurch gekennzeichnet,**
**daß** dem Spektralsubtraktionsfilter (H1) im abgehenden Signalkanal (SK1) ein weiteres Spektralsubtraktionsfilter (H3) nachgeschaltet ist und daß die zugehörige Einheit (LDS3) zur Bestimmung des Leistungsdichtespektrums des bereits gefilterten Mikrofonsignals zusätzlich mit einer Einheit (LDS-S3) zur Bestimmung des Minimums der Leistungsdichte in den Sprachpausen als Maß für die Störleistungsdichte gekoppelt ist, um die Übertragungsfunktion des zugehörigen Spektralsubtraktionsfilters (H3) zu beeinflussen, oder dass die Einheit (LDS-S3) das Leistungsdichtespektrum direkt bestimmt.

13. Anordnung nach einem der Ansprüche 8 bis 12,
**dadurch gekennzeichnet,**
**daß** bei Freisprecheinrichtungen mit mehr als einem Mikrofon (M1...Mn) Einrichtungen (LZ-CALC) zur Ermittlung der Laufzeitdifferenzen von den einzelnen Mikrofonen und Einrichtungen (FIR...) zur adaptiven Kompensation der Laufzeitdifferenzen vorgesehen sind, die mit einer Einrichtung (AD) zur phasensynchronen Addition aller laufzeitkompemsierten Mikrofonsignale gekoppelt sind.

## Claims

1. Method of echo and interference noise suppression in telecommunication equipment (TK), in particular for a telephone which is equipped with a hands-free device, in which the outgoing signal channel (SK1) is routed via a spectral subtraction filter (H1) which for attenuation takes account of parts which relate both to the power density spectrum of the interference signal and of the echo signal, **characterised in that** with reference to the echo signal the power density spectrum (LDS2) derived from the Fourier-transformed signal of the incoming signal channel (SK2) is taken into account.

2. Method as claimed in Claim 1, **characterised in that** the incoming signal channel (SK2) is also routed via a spectral subtraction filter (H2) which takes account of the power density spectrum (LDS3) of the microphone signal which is filtered as it goes out.

3. Method as claimed in Claim 1 or 2, **characterised in that** in the case of the power density spectrum (LDS1) derived from the unfiltered microphone signal the minimum power density is determined and is used as a measurement for the interference power density (LDS-S1) for formation of an interference-free outgoing microphone signal.

4. Method as claimed in Claim 3, **characterised in that** the power density spectrum (LDS1) is divided into sub-bands and in each of these sub-bands the minimum for the power density is determined, wherein the value for the interference power density is determined by plausibility checks and predetermined value range constraints.

5. Method as claimed in Claim 4, **characterised in that** the filtered microphone signal which is supplied by the spectral subtraction filter (H1) in the outgoing signal channel (SK1) is routed via a further spectral subtraction filter (H3), wherein in the breaks in speech a value for the interference power density (LDS-S3) is also determined from the power density spectrum (LDS3) of the already filtered microphone signal and is used for elimination of residual noise by the further spectral subtraction filter (H3) in the outgoing signal channel (SK1).

6. Method as claimed in any one of Claims 1 to 4, **characterised in that** in the case of hands-free devices with more than one microphone (M1 ... Mn) the time delay differences of the microphone signals are compensated by adaptively adjustable signal delays and the microphone signals are added in a phase-locked manner before the aggregate signal is passed on for further processing for echo and interference noise suppression.

7. Method as claimed in Claim 6, **characterised in that** the microphone causing the greatest time delay shift is chosen in each case as reference point for the compensation of the time delay differences.

8. Arrangement for echo and interference noise suppression in telecommunication equipment (TK), in particular for a telephone equipped with a hands-free device, in which the outgoing signal channel (SK1) is routed via a spectral subtraction filter (H1) which carries out a combined echo attenuation and interference noise reduction, **characterised in that** devices (FFT, LDS2) for Fourier transformation and for determining the power density spectrum are additionally coupled to the incoming signal channel (SK2) and that the device (LDS2) for determining the power density spectrum is connected to the device (CALC1) for calculating the transfer function for the spectral subtraction filter (H1) in order to compensate the echo signal.

9. Arrangement as claimed in Claim 8, **characterised in that** there is also disposed in the incoming signal channel (SK2) a spectral subtraction filter (H2), the components (FFT, LDS2) of which simultaneously provide the power density spectrum for the device for calculating the transfer function for the spectral subtraction filter (H1) in the outgoing signal channel (SK1), and that in the outgoing signal channel (SK1) a further device (LSD3) for determining the power density spectrum of the filtered microphone signal is coupled to the output of the spectral subtraction filter (H1) and is connected to the device (CALC2) for calculating the transfer function for the other spectral subtraction filter (H2) in the incoming signal (SK2) in order to reduce opposing appertaining portions of speech in the incoming signal channel for the loudspeaker (L).

10. Arrangement as claimed in any one of Claims 8 or 9, **characterised in that** the device (LDS1) for determining the power density spectrum of the unfiltered microphone signal for the spectral subtraction filter (H1) of the outgoing signal channel (SK1) also has coupled to it a device (MS) for determining the minimum power density of the microphone signal suffering interference as a measurement for the interference power density (LDS-S1), in order to influence the transfer function of the spectral subtraction filter (H1) of the outgoing signal channel (SK1) accordingly.

11. Arrangement as claimed in Claim 10, **characterised in that** the device (MS) for determining the minimum power density is also provided for determining the maximum, and that a unit for value range monitoring is provided which carries out a plausibility check with the aid of the determined extreme values in order to influence the correction of the microphone signal to be filtered.

12. Arrangement as claimed in Claim 11, **characterised in that** a further spectral subtraction filter (H3) is connected downstream of the spectral subtraction filter (H1) in the outgoing signal channel (SK1), and that the appertaining unit (LDS3) for determining the power density spectrum of the microphone signal which has already been filtered is additionally coupled to a unit (LDS-S3) for determining the minimum power density in the breaks in speech as a measurement for the interference power density in order to influence the transfer function of the appertaining spectral subtraction filter (H3), or that the unit (LDS-S3) determines the power density spectrum directly.

13. Arrangement as claimed in any one of Claims 8 to 12, **characterised in that** in the case of hands-free devices with more than one microphone (M1 ... Mn) devices (LZ-CALC) for determining the time delay differences of the individual microphones and devices (FIR ...) are provided for adaptive compensation of the time delay differences and are coupled to a device (AD) for phase-locked addition of all time delay-compensated microphone signals.

## Revendications

1. Procédé pour la réjection d'échos et de bruits parasites dans des appareils de communications téléphoniques (TK), en particulier pour un téléphone équipé d'un équipement mains libres, où le canal de signaux sortant (SK1) passe par un filtre à soustraction spectrale (H1) tenant compte pour l'atténuation d'éléments relatifs tant du spectre de densité de puissance du signal parasite que de celui du signal d'écho,
**caractérisé en ce que** relativement au signal d'écho, il est tenu compte du spectre de densité de puissance (LDS2) dérivé du signal de transformée de Fourier du canal de signaux entrant (SK2).

2. Procédé selon la revendication 1, **caractérisé en ce que** le canal de signaux entrant (SK2) passe également par un filtre à soustraction spectrale (H2) tenant compte du spectre de densité de puissance (LDS3) du signal de microphone filtré sortant.

3. Procédé selon la revendication 1 ou la revendication 2, **caractérisé en ce que** pour le spectre de densité de puissance (LDS1) dérivé du signal de microphone non filtré, le minimum de densité de puissance est déterminé et utilisé comme mesure pour la densité de puissance parasite (LDS-S1) afin de former un signal de microphone sortant non brouillé.

4. Procédé selon la revendication 3, **caractérisé en ce que** le spectre de densité de puissance (LDS1) est divisé en bandes partielles, et **en ce que** le minimum de densité de puissance est déterminé dans chacune de ces bandes partielles, la valeur pour la densité de puissance parasite étant déterminée par des contrôles de plausibilité et des limitations de plage de valeurs définies.

5. Procédé selon la revendication 4, **caractérisé en ce que** le signal de microphone filtré délivré par le filtre à soustraction spectrale (H1) dans le canal de signaux (SK1) sortant passe par un autre filtre à soustraction spectrale (H3), une valeur étant également déterminée pour la densité de puissance parasite (LDS-S3) à partir du spectre de densité de puissance (LDS3) du signal de microphone déjà filtré pendant les pauses vocales, et utilisée pour la suppression des bruits résiduels par l'autre filtre à soustraction spectrale (H3).

6. Procédé selon l'une des revendications 1 à 4, **caractérisé en ce que** pour des équipements mains libres avec plus d'un microphone (M1 ... Mn), les différences de temps de propagation des signaux de microphone sont compensées par des temporisations de signal adaptativement réglables et les signaux de microphone additionnés en synchronie de phase, avant que le signal de sommation soit adressé à un traitement ultérieur pour la réjection d'échos et de bruits parasites.

7. Procédé selon la revendication 6, **caractérisé en ce que** le microphone à l'origine du décalage de temps de propagation maximal est sélectionné comme point de référence pour la compensation des différences de temps de propagation.

8. Dispositif pour la réjection d'échos et de bruits parasites dans des appareils de communications téléphoniques (TK), en particulier pour un téléphone équipé d'un équipement mains libres, où le canal de signaux sortant (SK1) passe par un filtre à soustraction spectrale (H1) exécutant une atténuation d'échos et une réduction de bruits parasites combinées,
**caractérisé en ce que** des dispositifs (FFT, LDS2) pour la transformation de Fourier et pour la détermination du spectre de densité de puissance sont en outre couplés au canal de signaux (SK2) entrant, et **en ce que** le dispositif (LDS2) pour la détermination du spectre de densité de puissance est relié au dispositif (CALC1) de calcul de la fonction de transmission pour le filtre à soustraction spectrale (H1), afin de compenser le signal d'écho.

9. Dispositif selon la revendication 8, **caractérisé en ce qu'**un filtre à soustraction spectrale (H2) est également disposé dans le canal de signaux (SK2) entrant, dont les composants partiels (FFT, LDS2) délivrent simultanément le spectre de densité de puissance pour le dispositif de calcul de la fonction de transmission pour le filtre à soustraction spectrale (H1) dans le canal de signaux (SK1) sortant, et **en ce qu'**un autre dispositif (LDS3) pour la détermination du spectre de densité de puissance du signal de microphone filtré est couplé à la sortie du filtre à soustraction spectrale (H1) dans le canal de signaux (SK1) sortant, ledit dispositif étant relié au dispositif (CALC2) de calcul de la fonction de transmission pour l'autre filtre à soustraction spectrale (H2) dans le canal de signaux (SK2) entrant, afin de réduire des parts vocales propres contraires dans le canal de signaux entrant pour le haut-parleur (L).

10. Dispositif selon l'une des revendications 8 ou 9, **caractérisé en ce qu'**un dispositif (MS) pour la détermination du minimum de densité de puissance du signal de microphone brouillé est en outre couplé au dispositif (LDS1) pour la détermination du spectre de densité de puissance du signal de microphone non filtré pour le filtre à soustraction spectrale (H1) du canal de signaux (SK1) sortant, ledit minimum étant utilisé comme mesure pour la densité de puissance parasite (LDS-S1), afin d'influencer en conséquence la fonction de transmission du filtre à soustraction spectrale (H1) du canal de signaux (SK1) sortant.

11. Dispositif selon la revendication 10, **caractérisé en ce que** le dispositif (MS) pour la détermination du minimum de densité de puissance est également prévu pour la détermination du maximum, et **en ce qu'**une unité pour le contrôle de plage de valeurs est prévue, laquelle exécute un contrôle de plausibilité sur la base des valeurs extrêmes déterminées, afin d'influencer la correction du signal de microphone à filtrer.

12. Dispositif selon la revendication 11, **caractérisé en ce qu'**un autre filtre à soustraction spectrale (H3) est disposé en aval du filtre à soustraction spectrale (H1) dans le canal de signaux (SK1) sortant, et **en ce que** l'unité (LDS3) correspondante pour la détermination du spectre de densité de puissance du signal de microphone déjà filtré est en outre couplée à une unité (LDS-S3) pour la détermination du minimum de densité de puissance pendant les pauses vocales en tant que mesure pour la densité de puissance parasite, afin d'influencer la fonction de transmission du filtre à soustraction spectrale (H3) correspondant, ou **en ce que** l'unité (LDS-S3) détermine directement le spectre de densité de puissance.

13. Dispositif selon l'une des revendications 8 à 12, **caractérisé en ce que** pour des équipements mains libres avec plus d'un microphone (M1 ... Mn), des dispositifs (LZ-CALC) pour la détermination des différences de temps de propagation des différents microphones et dispositifs (FIR ...) sont prévus pour la compensation adaptative des différences de temps de propagation, et couplés à un dispositif (AD) pour l'addition en synchronie de phase de tous les signaux de microphone à temps de propagation compensés.
